# EUROPÄISCHE PATENTSCHRIFT

(11) **EP 0 897 436 B1**
(45) Veröffentlichungstag und Bekanntmachung des Hinweises auf die Patenterteilung: **05.09.2001**
(21) Anmeldenummer: 97906966.3
(22) Anmeldetag: 21.03.1997
(51) Int. Cl.: E04B 2/74, E04B 2/78, F16B 7/04

(54) **PROFILIERTE STANGE UND KLEMMPROFIL FÜR EINE PROFILIERTE STANGE**
SHAPED BAR AND CLAMPING SECTION FOR A SHAPED BAR
BARRE PROFILEE ET PROFILE DE SERRAGE POUR CELLE-CI

(30) Priorität: 29.04.1996 CH 107496; 13.11.1996 CH 281996
(43) Veröffentlichungstag der Anmeldung: 24.02.1999
(73) Patentinhaber: SYMA INTERCONTINENTAL AG, CH-9533 Kirchberg (CH)
(72) Erfinder: STRÄSSLE, Marcel, CH-9533 Kirchberg (CH)
(74) Vertreter: Liebetanz, Michael, Dipl.-Phys.
(86) Internationale Anmeldenummer: CH9700117
(87) Internationale Veröffentlichungsnummer: WO9741319

(56) Entgegenhaltungen:
- EP-A- 0 144 030
- AT-B- 324 654
- BE-A- 663 351
- US-A- 3 193 885
- US-A- 4 689 930

## Beschreibung

Die vorliegende Erfindung betrifft eine profilierte Stange gemäss dem Oberbegriff des Patentanspruchs 1.

Aus der AT-324 654 B ist eine solche profilierte Stange bekannt, bei der ein inneres Rohrteil und ein äusseres Rohrteil durch Stege miteinander verbunden sind und die Peripheriewand des äusseren Rohrteils hier acht jeweils benachbarte Längsschlitze aufweist. Dabei besteht die Möglichkeit, durch jeden Längsschlitz ein Bauteil einzusetzen.

Die US 4,689,930 beschreibt eine profilierte Stange, bei der bestimmte nicht genutzte Abschnitte, die jeweils Längsschlitzen entsprechen, durch Klemmprofile formschön abgeschlossen werden können. Die Flexibilität dieses Systems ist aber durch die unsymmetrische Ausführung der Stange eingeschränkt.

Aus der CH-415 999 ist eine profilierte Stange bekannt, die sich aus einem zentralen kreisförmigen Ring und vier gleichen Pfeilen zusammensetzt, die radial um 90° gegeneinander versetzt vom Ring aus mit der Spitze nach aussen gerichtet sind, wobei die Stange vier Längsschlitze aufweist, die sich jeweils zwischen zwei Spitzen befinden.

Es ist Aufgabe der Erfindung, eine derartige profilierte Stange zu verbessern.

Diese Aufgabe wird erfindungsgemäss durch eine profilierte Stange mit den in Patentanspruch 1 angegebenen Merkmalen gelöst.

Die erfindungsgemässe Lösung ergibt ein vielseitig anwendbares Tragsäulensystem, das ein einfaches seitliches Montieren von Wänden erlaubt.

Weitere vorteilhafte Ausführungen der Erfindung sind in den abhängigen Ansprüchen angegeben.

In den Figuren sind Ausführungsbeispiele der Erfindung dargestellt. Es zeigen:
- Figur 1: eine perspektivische Ansicht einer ersten Ausführung der erfindungsgemässen profilierten Stange,
- Figur 2: eine Darstellung des Querschnitts einer Ausführung dieser Stange, jedoch ohne innere Rippen,
- Figur 3: eine perspektivische Ansicht einer zweiten Ausführung der erfindungsgemässen profilierten Stange,
- Figur 4: eine perspektivische Ansicht eines lösbar an einer dieser Stangen befestigbaren Trägerelementes,
- Figur 5: eine seitliche Ansicht einer dritten Ausführung einer erfindungsgemässen profilierten Stange,
- Figur 6: eine Darstellung des Querschnitts dieser Stange,
- Figur 7: eine Darstellung des Querschnitts eines erfindungsgemässen Klemmprofils für die profilierte Stange nach Figuren 1, 3 oder 5,
- Figur 8: eine schematische Darstellung eines lösbar an einer Stange nach Figur 5 eingeklemmten Klemmprofils,
- Figur 9 bis 11: Beispiele von Anwendungen des erfindungsgemässen Klemmprofils und der erfindungsgemässen profilierten Stange,
- Figur 12: Beispiele von Querschnitten von Stangen gemäss weiteren Ausführungen,
- Figur 13: eine perspektivische Darstellung einer weiteren Ausführung eines Klemmprofils nach der Erfindung, und
- Figur 14 & 15: je eine weitere Variante des Querschnitts eines erfindungsgemässen Klemmprofils.

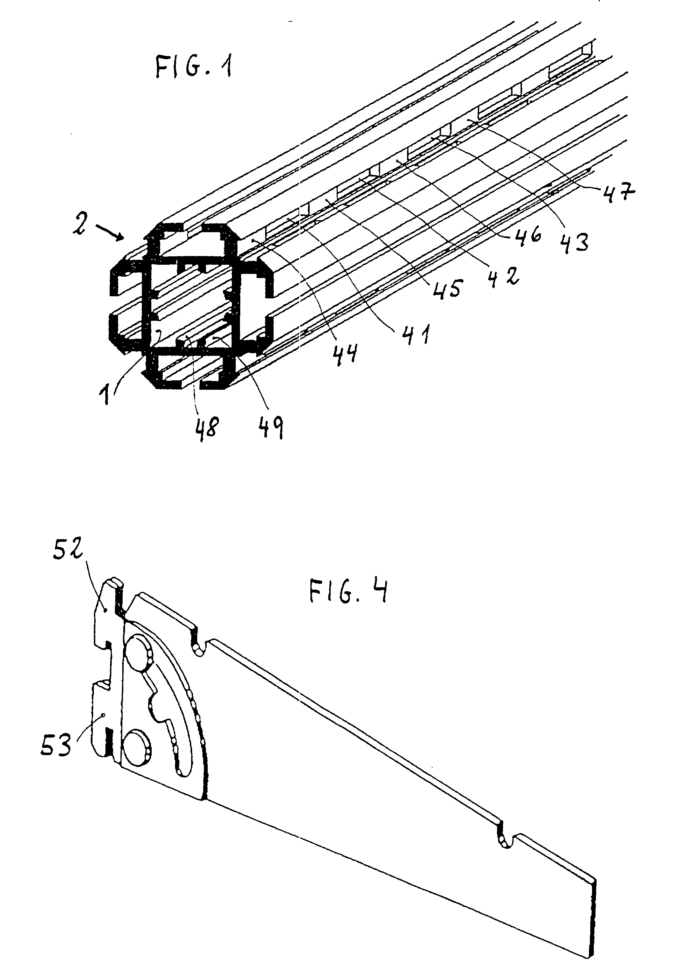

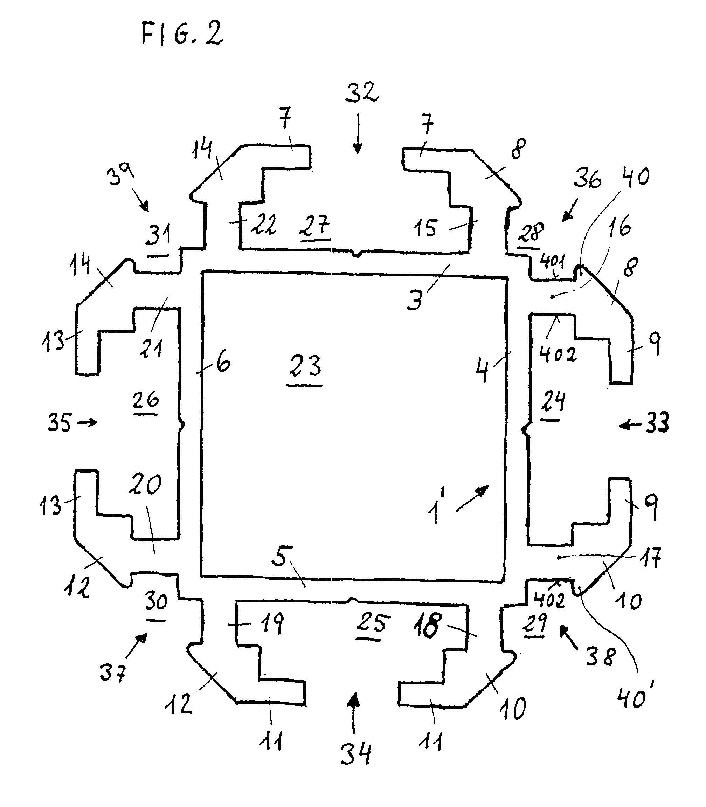

Die profilierten Stangen nach Fig. 1 bzw. 2 setzen sich aus einem inneren Rohrteil 1 bzw. 1' mit einem quadratischen Querschnitt, der gegebenenfalls auch polygonal oder rund sein könnte, und einem äusseren Rohrteil 2 mit einem oktogonalen Querschnitt zusammen, der ebenfalls polygonal oder rund sein kann. Der innere Rohrteil 1 bzw. 1' (Fig. 2) hat vier relativ dünne Seitenwände 3, 4 , 5 und 6. Der äussere Rohrteile 2 weist acht relativ dünne Seitenwände 7 bis 14 auf. Die Rohrteile 1 bzw. 1' und 2 sind durch acht längliche Stege oder Rippen 15 bis 22 verbunden, die sich paarweise von den Eckbereichen einer Seitenwand des inneren Rohrteils 1 bzw. 1' nach aussen erstrecken, und zwar jeweils senkrecht zu dieser Seitenwand. Jeder Steg 15 bis 22 ist mit dem Vereinigungsbereich von zwei nebeneinanderliegenden Wänden des oktogonalen Rohrteils verbunden. Da die Wände der Rohrteile 1, 1' und 2 und die Dicke der Stege 15 bis 22 relativ dünn im Vergleich zur Höhe oder Breite der Stange sind, ergeben sich neun Hohlräume zwischen den zwei Rohrteilen 1, 1' und 2. Der grösste Hohlraum 23 befindet sich im Innern des inneren Rohrteils 1, 1'. Vier mittelgrosse Hohlräume 24, 25, 26, 27 befinden sich zwischen den Wänden beider Rohrteile 1, 1' und 2 und den Stegen 16 und 17, bzw.18 und 19, bzw. 20 und 21 bzw. 22 und 15. Die vier kleineren Hohlräume 23, 29, 30 und 31 befinden sich zwischen den Ecken des inneren Rohrteils 1, 1', den Wänden des äusseren Rohrteils 2 und den Stegen 15 und 16 bzw. 17 und 18, bzw. 19 und 20, bzw. 21 und 22.

Die vier Wände 7, 9, 11 und 13 des äusseren Rohrteils 2 verlaufen somit parallel zu den vier Seitenwänden 3, 4, 5 bzw. 6 des inneren Rohrteils 1, 1' und sind jeweils mit einem mittigen Längsschlitz 32, 33, 34 und 35 versehen, die Öffnungen der mittelgrossen Hohlräume 27, 24, 25 bzw. 26 mit der Aussenwelt darstellen.

Zwei weitere Seitenwände 3 und 12 des äusseren Rohrteils 2 verlaufen parallel zu der einen Diagonale des Querschnitts des inneren Rohrteils 1, 1' und sind mit je einem mittigen Längsschlitz 36, 37 versehen, die Öffnungen von diesen zwei kleineren Hohlräumen 28, 30 zur Aussenwelt darstellen. Die zwei anderen Seitenwände 10 und 14 des äusseren Rohrteils 2 verlaufen parallel zu der anderen Diagonale des Querschnitts des inneren Rohrteils 1, 1' und sind mit je einem mittigen Längsschlitz 38, 39 versehen, die Öffnungen dieser zwei kleineren Hohlräume 29, 31 zur Aussenwelt darstellen. Da die vier kleineren Hohlräume 28, 29, 30 und 31 relativ klein sind, ergibt es sich, dass die Seitenwände 8, 10, 12 und 14 des äusseren Rohrteils 2 im Bereich der Längsschlitze 36, 38, 37 und 39 teilweise durch relativ dünne längliche Rippen 40, 40', ... gebildet sind. Die Stege weisen beidseitig je eine Führungsnut, z.B. 401 bzw. 402 auf, die vorzugsweise dieselbe Nutbreite aufweisen.

Die Stege 15 bis 22 (Fig. 1) sind im Boden der Nuten 401, 402, ... mit durchgehenden Ausnehmungen 41, 42, 43, ... versehen, die sich vorzugsweise jeweils in regelmässigen Abständen zwischen Stegwandungen 44, 45, 46 bzw. 47, ... befinden.

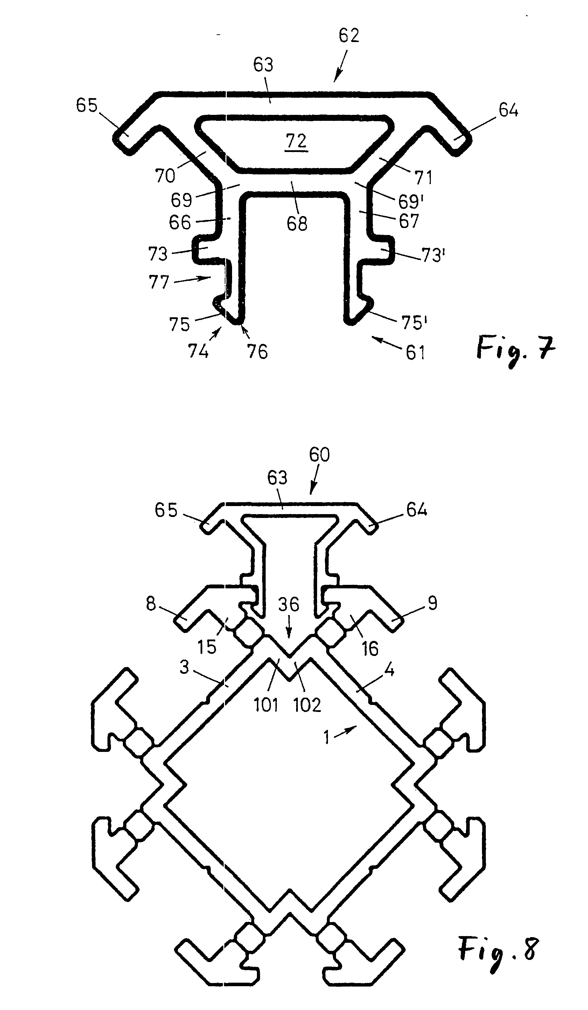

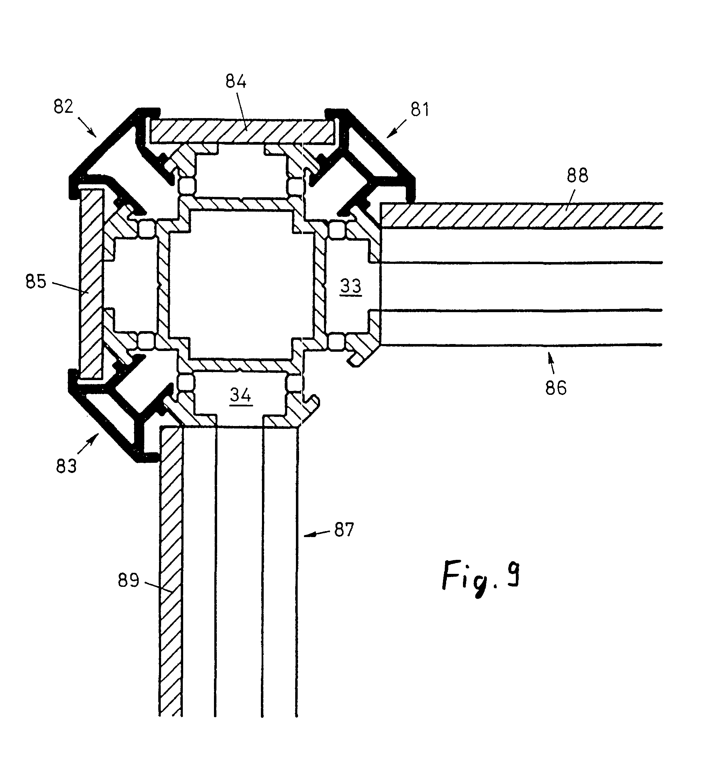

Die Breite der mit den kleineren Hohlräumen kommunizierenden Längsschlitze 36, 37, 38 und 39 ist so gross dimensioniert, dass eine Platte oder ein flaches Element (Fig. 4) in einen dieser Längsschlitze eingeführt werden kann, unabhängig davon, ob die Platte parallel zu der einen oder anderen Seitenwand des inneren Rohres verläuft. Zu diesem Zweck kann beispielsweise die äussere Kante oder Rippe 40 der äusseren Seitenwand einer Nut (401) in derselben Ebene der äusseren Oberfläche der Seitenwand 3 des inneren Rohrteils 1, 1' liegen, oder der Abstand zwischen den entfernteren äusseren Kanten 40 und 40' der äusseren Seitenwände von zwei Nuten 402, 402' von zwei benachbarten parallelen Stegen 16 und 17 beispielsweise kann kleiner als die Breite des inneren Rohrteils 1, 1' zwischen den äusseren Oberflächen der gegenüberliegenden Seitenwände 3 und 5 sein.

Bei der Ausführung nach Fig. 1 weist der innere Rohrteil 1 acht inwendige längliche Führungsrippen 48, 49, ... auf, die endseitig zylinderförmig ausgebildete Stirnflächen aufweisen, derart, dass die Führungsrippen 48, 49, ... als Führungen für ein zylindrisches Rohr mit rundem Querschnitt dienen können und vorzugsweise paarweise mittig an der Innenseite der Seitenwände des Rohrteils 1 ihn entlang angeordnet sind.

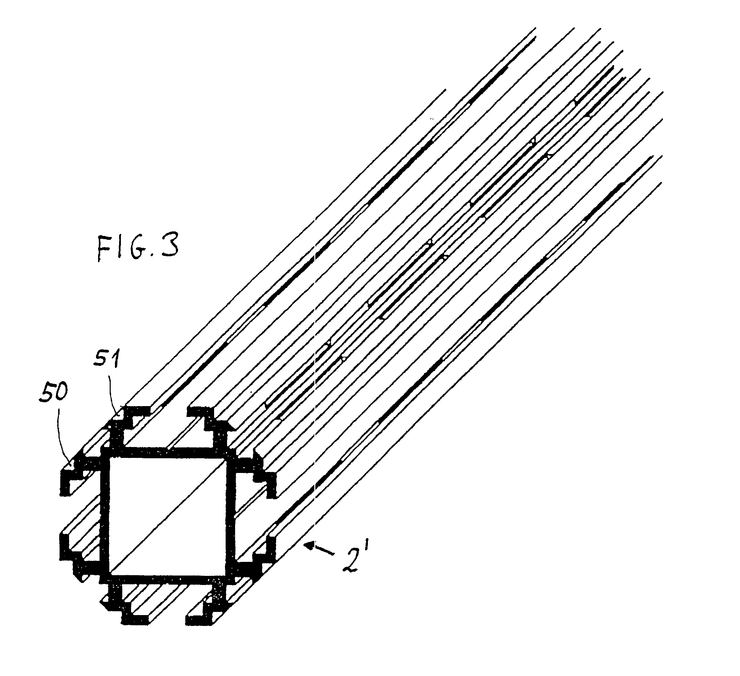

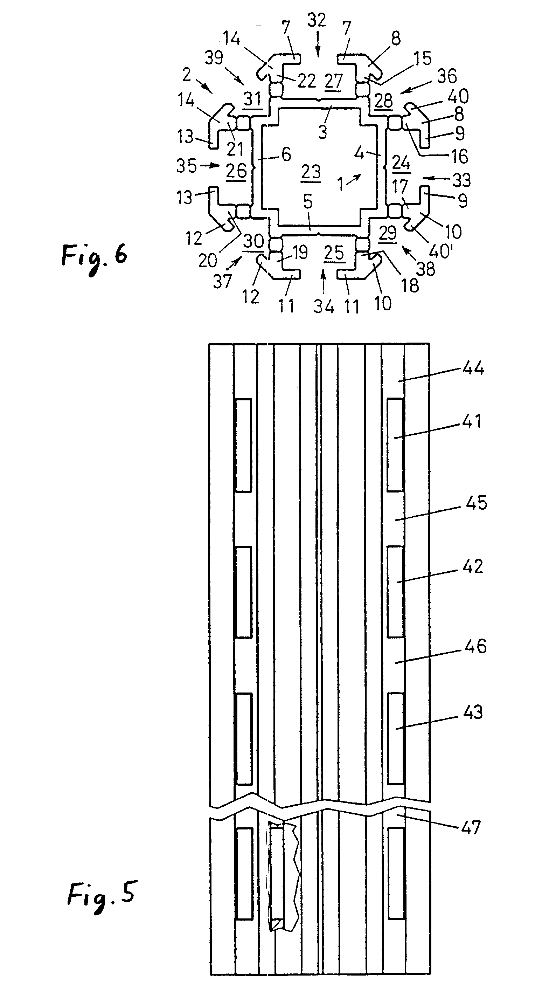

Bei der Ausführung nach Fig. 3 weist der äussere Rohrteil 2' acht schulterförmige als Führungen dienende Rillen oder Vertiefungen 50, 51 auf, und zwar vorzugsweise, wie aus Fig. 3 ersichtlich, in einem Winkel von 90°.

Das flache Trägerelement nach Fig. 4 weist an sich bekannte Haken 52, 53 auf, die in die Öffnungen 41, 42, 43, ... einführbar sind, um das Trägerelement an der profilierten Stange zu montieren.

Die Nuten 401, 402, ... (Fig. 2) sind als Führungsnuten ausgebildet, haben dieselbe Nutbreite und weisen links und rechts Seitenwände auf, die sich paarweise in zwei parallelen Ebenen befinden.

Der Abstand zwischen den entfernteren äusseren Kanten oder der Rippen 40, 40' der äusseren Seitenwänden von zwei Nuten 402, 402' von zwei benachbarten parallelen Stegen 16, 17 ist jeweils vorzugsweise kleiner als der Abstand zwischen den äusseren Oberflächen von zwei gegenüberliegenden Seitenwänden 3, 5 des inneren Rohrteils 1, 1'.

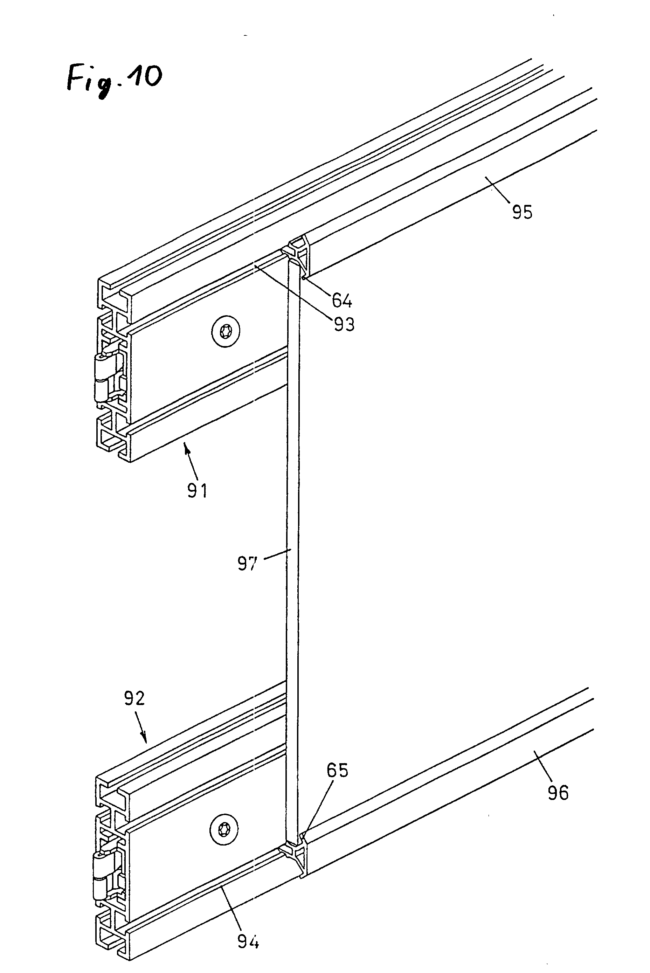

Die Figuren 5 und 6 zeigen eine profilierte Stange nach einem zweiten Ausführungsbeispiel der Erfindung. Gleiche Merkmale sind in den Zeichnungen jeweils mit den gleichen Bezugszeichen gekennzeichnet. Die profilierten Stangen setzen sich ebenfalls aus einem inneren Rohrteil 1 mit einem im wesentlichen quadratischen Querschnitt und einem äusseren Rohrteil 2 mit einem oktogonalen Querschnitt zusammen.

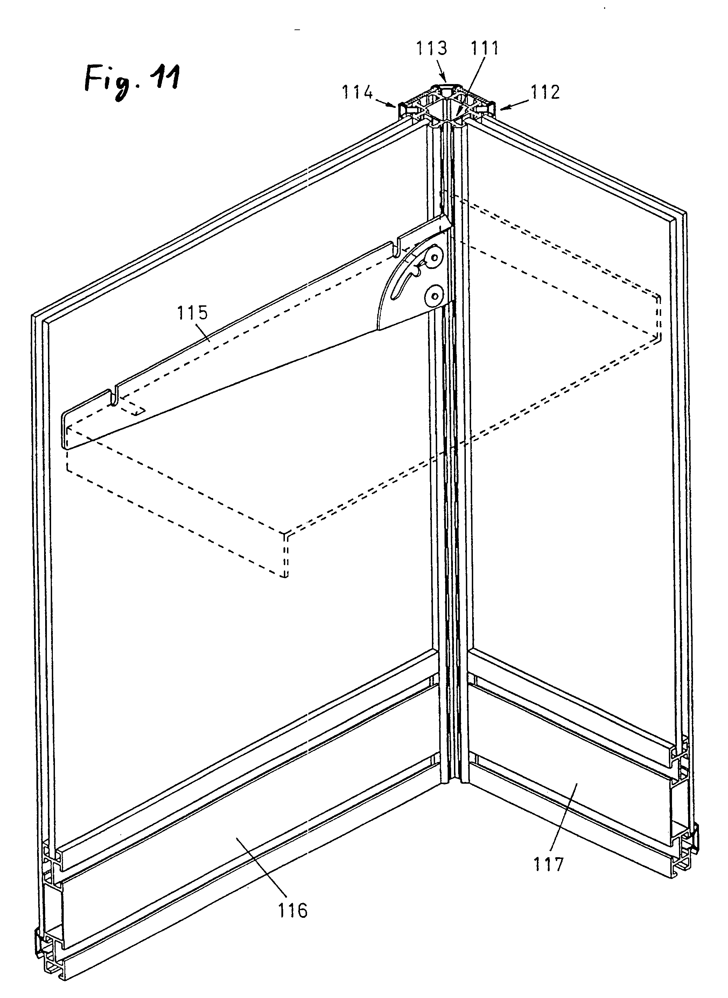

Die Stege 15 bis 22 sind gemäss Fig. 6 mit durchgehenden Ausnehmungen 41, 42, 43, ... versehen, die sich vorzugsweise jeweils in regelmässigen Abständen zwischen Stegwandungen 44, 45, 46 bzw. 47, ... befinden. Die Breite der mit den kleineren Hohlräumen kommunizierenden Längsschlitze 36, 37, 38 und 39 ist so gross dimensioniert, dass eine Platte oder ein flaches Trägerelement (siehe Fig. 11) in einen dieser Längsschlitze eingeführt werden kann, unabhängig davon, ob die Platte parallel zu der einen oder anderen Seitenwand des inneren Rohres verläuft. Zu diesem Zweck kann beispielsweise die äussere Rippe 40 in derselben Ebene der äusseren Oberfläche der Seitenwand 3 liegen, oder der Abstand zwischen den Kanten 40 und 40' kann kleiner als die Breite des inneren Rohrteils 1 zwischen den äusseren Oberflächen der gegenüberliegenden Seitenwände 3 und 5 sein.

Das Klemmprofil nach Fig. 7 setzt sich aus einem invertierten U-Profil 61 und einem Flachprofil 62 zusammen, das neben einer streifenförmigen Wand 63 vorzugsweise je eine abgewinkelte seitliche Längskante 64, 65 aufweist. Die Schenkel 66, 67 des U-Profils sind zwei parallele mit einem länglichen Boden 68 verbundene längliche Wände, derart, dass sich zwei Eckbereiche 69, 69' ergeben. Der linke Eckbereich 69 des U-Profils ist durch einen länglichen Steg 70 und der rechte Eckbereich 69' durch einen länglichen Steg 71 mit dem Flachprofil 62 verbunden. Die Wand 63, die Stege 70 und 71 und der Boden 68 des U-Profils 61 umschliessen einen Hohlraum 72. 3. Die inneren Oberflächen der zwei länglichen Wände 66, 67 sind ebene Gleitflächen. Der längliche Boden kann durch das Hilfsprofil 63 gebildet werden.

Die Wand 66 hat eine aussenseitige parallel zum Boden 68 verlaufende Längsrippe 73, die sich im Bereich zwischen der Endkante 74 der Wand 66 und dem Boden 68 befindet. Die Endkante 74 ist in Form einer sich nach aussen erstreckenden Rampe 75 ausgestaltet, die ein spitziges nach innen gerichtetes Ende 76 der Wand 66 bildet, wobei das andere Ende der Rampe 75 und die Rippe 73 eine längliche Führungsnut 77 bilden, deren Breite der Dicke der Wände 7, 9, 11 und 13 (Fig. 2 oder 6) entspricht. Die Wand 67 des U-Profils weist ebenfalls eine Rippe 73' und eine Rampe 75' auf, die symmetrisch zu den entsprechenden Teilen der Wand 66 angeordnet sind.

Fig. 8 zeigt ein in den Schlitz 36 einer Stange eingeklemmtes Klemmprofil 60, wobei an den Ecken des inneren Rohrteils 1 die Seitenwände 3, 4, ... vorzugsweise derart nach innen abgewinkelt sind, dass der abgewinkelte Streifen 101 der Wand 3 als Verlängerung des Stegs 15 und der abgewinkelte Streifen 102 der Wand 4 als Verlängerung des Stegs 16 erscheint.

Das Klemmprofil 60 besteht vorzugsweise aus einem harten Material, z.B. einem PVC-Kunststoff, der jedoch elastisch genug ist, um durch Ausübung eines Drucks auf die Wand 63, wenn die Rampen 75 die äusseren Kanten der Stange im Bereich des Schlitzes 36 berühren, eine gleitende Verengung des Abstandes zwischen den zwei Wänden 66, 67 zu bewirken, indem das Klemmprofil in den Schlitz 36 hineingedrückt wird, bis es darin zwischen den Rippen 73, 73' und den Schultern der Rampen 75, 75' eingeklemmt bleibt. Die Kanten 64, 65 des Klemmprofils sind derart ausgebildet, dass sie im montierten Zustand vorzugsweise parallel zur Wand 8 bzw. 9 verlaufen (Fig. 8).

Im Beispiel nach Fig. 9 sind in einer Stange drei Klemmprofile 81, 82, 83 eingeklemmt, wobei zwischen den Klemmprofilen 81 und 82 eine erste streifenförmige Platte 84 und zwischen den Klemmprofilen 82 und 83 eine zweite streifenförmige Platte 85 gehalten wird.

An den Schlitzen 33 und 34 ist je eine Flachstange 86 bzw. 87 in an sich bekannter Weise mit Hilfe von Klemmelementen befestigt. Wie aus Fig. 9 ersichtlich können zusätzliche Platten 88 und 89 zwischen einer Flachstange 86 bzw. 87 und einem Klemmprofil 81 bzw. 83 gehalten werden.

Fig. 10 zeigt zwei Flachstangen 91, 92, in deren Endbereichen eine Klemmvorrichtung untergebracht ist, um sie an einer nicht dargestellten Tragstange montieren zu können. Die Flachstangen 91, 92 sind mit mindestens je einem Längsschlitz 93, 94 versehen, in die jeweils ein Klemmprofil 95, 96 nach der Erfindung eingeklemmt ist. Eine Platte 97, vorzugsweise aus Kunststoff, Glas oder einem anderen Leichtmaterial, ist einerseits zwischen der Kante 64 des Klemmprofils 95 und der Flachstange 91 und andererseits zwischen der Kante 65 des Klemmprofils 96 und der Flachstange 92 eingefügt, wobei die Endbereiche der Platte 97 nahe der Klemmprofile 95, 96 flach an den Flachstangen anliegen.

Fig. 11 zeigt eine mit einem runden inneren Rohrteil versehene Trägerstange 111, die acht Längsschlitze aufweist, von denen drei mit je einem Klemmprofil 112, 113, 114 belegt sind. An der Trägerseite sind ein Trägerelement 115 und zwei Flachstangen 116, 117 befestigt, die mit Schlitzen für weitere Klemmprofile versehen sind. Die Kanten der Klemmprofile dienen zur Abstützung von Platten. An das Trägerelement 115 ist seitlich eine Tragfläche 118 angehängt. Dieses Trägerelement 115, welches parallel zu der Flachstange 116 angeordnet ist, kann insbesondere aber auch, an Stelle von diesem oder zusätzlich zu diesem, parallel zu dem Flachelement 117 eingehängt werden, was eine vielseitige Anwendbarkeit der profilierten Stange zeigt.

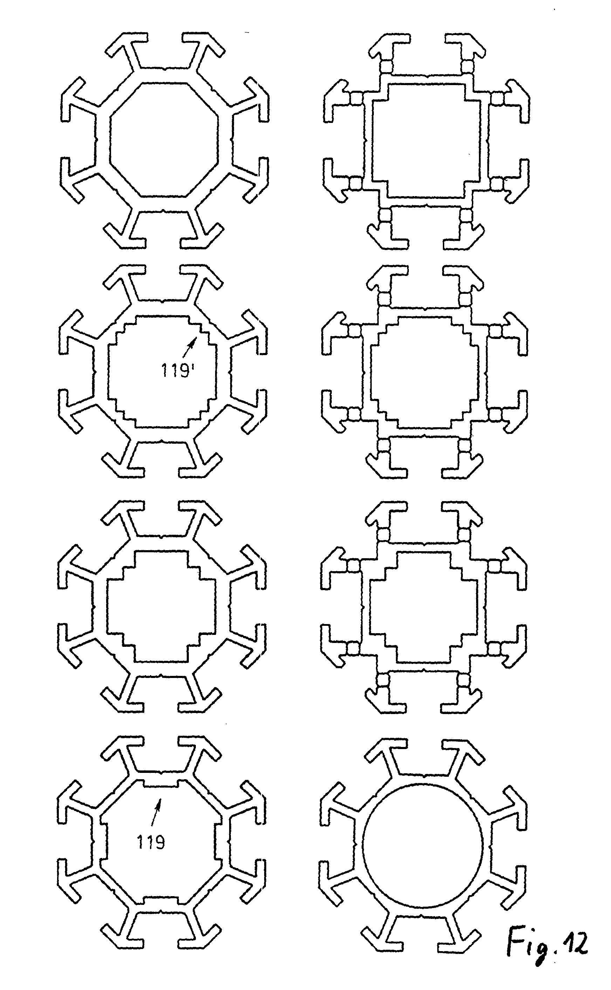

Fig. 12 zeigt verschiedene Varianten des Querschnitts einer Stange nach der Erfindung, bei denen der innere Rohrteil inwendig Verdickungen 119, 119' aufweisen kann, die beispielsweise stufenförmig ausgebildet sind.

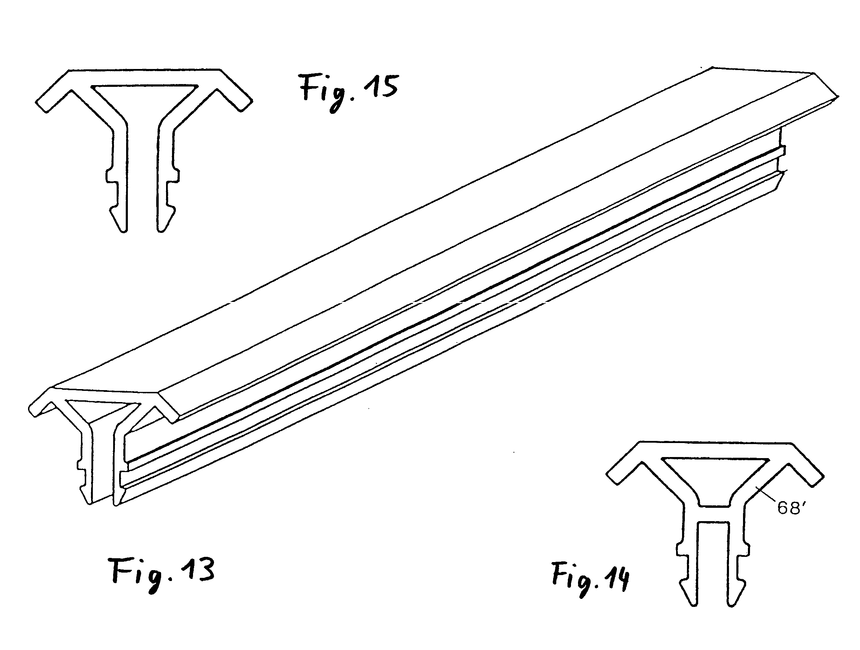

Fig. 13 zeigt ein Klemmprofil ohne einen zusätzlichen Boden 68 (Fig. 7) und ohne Hohlraum 72, dass heisst, der Boden 68 kann als ein Teil des Hilfsprofils 62 betrachtet werden. Dabei ist der untere Teil des angenähert U-förmigen Querschnitts seitlich nach aussen erweitert.

Beim Profil nach Fig. 14 ist der Boden 68' nicht im gekrümmten Bereich 69, 69', sondern etwas tiefer mit den Wänden 66, 67 verbunden. Das Profil nach Fig. 15 hat einen Querschnitt wie das Profil nach Fig. 14, jedoch ohne Boden 68'.

Das Hilfsprofil 62 kann als Abdeckprofil für einen Schlitz einer Stange ausgebildet sein.

## Patentansprüche

1. Profilierte Stange mit einem inneren Rohrteil (1; 1') und einem äusseren Rohrteil (2), wobei beide Rohrteile durch Stege miteinander verbunden sind und die Peripheriewand (8, 10, 12, 14) des äusseren Rohrteils (2) mindestens zwei benachbarte Längsschlitze (36, 33, 38, 34, 37, 35, 39, 32) aufweist, **dadurch gekennzeichnet,** dass zwischen beiden Seiten jedes Stegs (16 bis 22) durchgehende Ausnehmungen (41, 42, 43) zur Halterung eines flachen Trägerelementes (115) vorgesehen sind, die, im Querschnitt der profilierten Stange betrachtet, jeweils parallel zu den benachbarten Aussenseiten des inneren Rohrteils (1, 1') ausgerichtet sind.

2. Stange nach Anspruch 1, **dadurch gekennzeichnet**, dass an beiden Seiten jedes Stegs (16 bis 22) je eine längliche Nut (401; 402) vorhanden ist, die jeweils über einen dieser Längsschlitze (36, 33, 38, 34, 37, 35, 39, 32) mit der Aussenwelt kommuniziert, wobei diese Nuten (401; 402) als Führungsnuten ausgebildet sind und dieselbe Nutbreite aufweisen, derart, dass die Nuten (401, 402) Seitenwände aufweisen, die sich paarweise in zwei parallelen Ebenen befinden.

3. Stange nach Anspruch 1 oder 2, **dadurch gekennzeichnet**, dass der innere Rohrteil (1; 1') einen quadratischen Querschnitt mit vier Seitenwänden (3, 4, 5, 6) und der äussere Rohrteil (2) einen oktogonalen Querschnitt mit acht Seitenwänden (7, ... 14) aufweist, dass die zwei Rohrteile (1, 1'; 2) durch acht längliche Stege (15, ... 22) verbunden sind, die sich paarweise (16, 17; 18, 19; ...) von den Eckbereichen einer Seitenwand des inneren Rohrteils (1, 1') jeweils senkrecht zu dieser Seitenwand nach aussen erstrecken, dass jeder Steg (15, ... 22) mit dem Vereinigungsbereich von zwei benachbarten Seitenwänden des oktogonalen Rohrteils verbunden ist, dass vier Wände (7, 9, 11, 13) des äusseren Rohrteils (2) parallel zu den vier Seitenwänden (3, 4, 5, 6) des inneren Rohrteils (1; 1') verlaufen und je einen mittigen Längsschlitz (32, 33 34, 35) aufweisen, dass zwei weitere Seitenwände (8, 12) des äusseren Rohrteils (2) parallel zu der einen Diagonale des Querschnitts des inneren Rohrteils (1; 1') verlaufen und je einen mittigen Längsschlitz (36, 37) aufweisen, und dass die zwei anderen Seitenwände (10, 14) des äusseren Rohrteils (2) parallel zu der anderen Diagonale des Querschnitts des inneren Rohrteils (1, 1') verlaufen und je einen mittigen Längsschlitz (38, 39) aufweisen.

4. Stange nach einem der Ansprüche 1 bis 3, **dadurch gekennzeichnet**, dass die durchgehenden Ausnehmungen (41, 42, 43, ...) der Stege (15 ... 22) jeweils in regelmässigen Abständen durch Stegwandungen (44, 45, 46, 47, ...) getrennt sind.

5. Stange nach einem der Ansprüche 1 bis 4, **dadurch gekennzeichnet**, dass die Breite der Längsschlitze (36, 37, 38, 39) der parallel zu den Diagonalen verlaufenden Seitenwände (8, 10, 12, 14) so gross dimensioniert ist, dass eine Platte oder ein flaches Element in einen dieser Längsschlitze eingeführt werden kann, unabhängig davon, ob die Platte parallel zu der einen (3, 5) oder anderen Seitenwand (4, 6) des inneren Rohres (1; 1') verläuft.

6. Stange nach einem der vorstehenden Ansprüche, **dadurch gekennzeichnet**, dass ein Klemmprofil vorgesehen ist, das zumindest angenähert aus einem U-Profil (61) und einem Hilfsprofil (62) zusammensetzt ist, und dass das U-Profil zwei längliche mit einem länglichen Boden (63; 68) verbundene Wände (66, 67) umfasst, von denen, im Querschnitt des U-Profils betrachtet, mindestens eine eine Endkante (74) aufweist, die in Form einer sich nach aussen erstreckenden Rampe (75) ausgestaltet ist, die ein spitziges nach innen gerichtetes Ende (76) dieser Wand (66) bildet.

7. Stange nach Anspruch 6, **dadurch gekennzeichnet**, dass mindestens eine dieser Wände (66) des Klemmprofils eine aussenseitige parallel zum Boden (63; 68) verlaufende Längsrippe (73) aufweist, die sich im Bereich zwischen der Endkante (74) der Wand (66) und dem Boden (68) befindet, und dass das andere Ende der Rampe (75) und die Längsrippe (73) eine längliche Führungsnut (77) zur Aufnahme der Wände des äusseren Rohrteils der profilierten Stange bilden.

8. Stange nach Anspruch 6 oder 7, **dadurch gekennzeichnet**, dass die zwei Wände (66, 67) des Klemmprofils je eine Rippe (73, 73') und eine Rampe (75, 75') aufweisen, die symmetrisch bezüglich einer zwischen den zwei Wänden (66, 67) verlaufenden Symmetrieebene angeordnet sind.

9. Stange nach einem der Ansprüche 6 bis 8, **dadurch gekennzeichnet**, dass das Hilfsprofil ein Flachprofil ist, das vorzugsweise eine streifenförmige Wand (63) mit mindestens einer abgewinkelten seitlichen Längskante (64, 65) aufweist, und /oder dass das Hilfsprofil mindestens eine Längskante aufweist, die als Stütze für eine Platte dient.

10. Stange nach einem der Ansprüche 6 bis 9, **dadurch gekennzeichnet**, dass ein erster Eckbereich (69) des U-Profils durch einen länglichen Steg (70) und ein zweiter Eckbereich (69') durch einen länglichen Steg (71) mit dem Hilfsprofil (62) verbunden ist, wobei vorzugsweise diese Stege (70, 71) einen Winkel mit den länglichen Wänden (66, 67) bilden.

## Claims

1. Profiled bar having an inner tube part (1; 1') and an outer tube part (2), the two tube parts being connected to one another by webs, and the peripheral wall (8, 10, 12, 14) of the outer tube part (2) having at least two adjacent longitudinal slots (36, 33, 38, 34, 37, 35, 39, 32), **characterized in that** through-passages (41, 42, 43) for securing a flat support element (115) are provided between the two sides of each web (15 to 22), and these through-passages, as seen in the cross-section of the profiled bar, are each aligned parallel to the adjacent outer sides of the inner tube part (1, 1').

2. Bar according to Claim 1, **characterized in that** in each case one elongate groove (401; 402) is provided on the two sides of each web (15 to 22), and said groove communicates with the exterior via one of said longitudinal slots (36, 33, 38, 34, 37, 35, 39, 32), said grooves (401; 402) being designed as guide grooves and having the same groove width, such that the grooves (401, 402) have side walls which are located in pairs in two parallel planes.

3. Bar according to Claim 1 or 2, **characterized in that** the inner tube part (1; 1') has a square cross-section with four side walls (3, 4, 5, 6) and the outer tube part (2) has an octagonal cross-section with eight side walls (7, ... 14), in that two tube parts (1, 1'; 2) are connected by eight elongate webs (15, ... 22) which extend outward in pairs (16, 17; 18, 19; etc.) from the corner regions of a side wall of the inner tube part (1, 1'), and perpendicularly with respect to said side wall in each case, in that each web (15, ... 22) is connected to the junction region of two adjacent side walls of the octagonal tube part, in that four walls (7, 9, 11, 13) of the outer tube part (2) run parallel to the four side walls (3, 4, 5, 5) of the inner tube part (1; 1') and each have a central longitudinal slot (32, 33, 34, 35), in that two further side walls (8, 12) of the outer tube part (2) run parallel to one diagonal of the cross-section of the inner tube part (1; 1') and each have a central longitudinal slot (36, 37), and in that the other two side walls (10, 14) of the outer tube part (2) run parallel to the other diagonal of the cross-section of the inner tube part (1, 1') and each have a central longitudinal slot (38, 39).

4. Bar according to one of the Claims 1 to 3, **characterized in that** the through-passages (41, 42, 43, etc.) of the webs (15, ... 22) are separated at regular intervals in each case by web walls (44, 45, 46, 47, etc.).

5. Bar according to one of the Claims 1 to 4, **characterized in that** the width of the longitudinal slots (36, 37, 38, 39) of the side walls (8, 10, 12, 14) running parallel to the diagonals is dimensioned to be of such a magnitude that a panel or a flat: element can be introduced into one of said longitudinal slots, irrespective of whether the panel runs parallel to one side wall (3, 5) or the other (4, 6) of the inner tube (1; 1').

6. Bar according to one of the preceding Claims, **characterized in that** a clamping profile is provided made up at least approximately of a U-profile (61) and an auxiliary profile (62), and in that the U-Profile comprises two elongate walls (66, 67) which are connected to an elongate base (63; 68) and of which at: least one has, in a cross-sectional view of the U-profile, an end edge (74) which is configured in the form of an outwardly extending ramp (75), which forms an acute-angled inwardly directed end (76) of this wall (66).

7. Bar according to Claim 6, **characterized in that** at least: one of these walls (66) has an outer longitudinal rib (73) which runs parallel to the base (63; 68) and is located in the region between the end edge (74) of the wall (66) and the base (68), and in that the other end of the ramp (75) and the longitudinal rib (73) form an elongate guide groove (77) to accommodate the walls of the external tube portion of the profiled bar.

8. Bar according to Claim 6 or 7, **characterized in that** the two walls (66, 67) each have a rib (73, 73') and a ramp (75, 75'), which are arranged symmetrically with respect to a plane of symmetry running between the two walls (66, 67).

9. Bar according to one of the Claims 6 to 8, **characterized in that** the auxiliary profile is a flat profile which preferably has a strip-like wall (63) with at least one angled lateral longitudinal edge (64, 65), and/or in that the auxiliary profile has at least one longitudinal edge which serves as a support for a panel.

10. Bar according to one of the Claims 6 to 9, **characterized in that** a first corner region (69) of the U-profile is connected to the auxiliary profile (62) by an elongate web (70) and a second corner region (69') is connected to the auxiliary profile (62) by an elongate web (71), said webs (70, 71) preferably forming an angle with the elongate walls (66, 67).

## Revendications

1. Barre profilée comportant un élément tubulaire intérieur (1; 1') et un élément tubulaire extérieur (2), les deux éléments tubulaires étant reliés entre eux par des barrettes, et la paroi périphérique (8, 10, 12, 14) de la partie tubulaire extérieure (2) possédant au moins deux fentes longitudinales voisines (36, 33, 38, 34, 37, 35, 39, 32), **caractérisée en ce qu**'entre les deux côtés (16 à 22) sont prévus des évidements continus (41, 42, 43) servant à retenir un élément de support plat (115), qui, lorsqu'on regarde la section transversale de la barre profilée, sont orientés de manière à être respectivement parallèles aux côtés extérieurs voisins de l'élément tubulaire intérieur (1, 1').

2. Barre selon la revendication 1, **caractérisée en ce que** sur les deux côtés de chaque barrette (16 à 22) est présente respectivement une rainure annulaire (401; 402), qui communique respectivement avec le monde extérieur par l'intermédiaire de l'une de ces fentes longitudinales (36, 33, 38, 34, 37, 35, 39, 32), ces rainures (401; 402) étant agencées sous la forme de rainures de guidage et possédant la même largeur de rainure de sorte que les rainures (401, 402) possèdent des parois latérales qui sont situées par couples dans deux plans parallèles.

3. Barre selon la revendication 1 ou 2, **caractérisée en ce que** l'élément tubulaire intérieur (1, 1') possède une section transversale carrée comportant quatre côtés secondaires (3, 4, 5, 6) et la partie tubulaire extérieure (2) possède une section transversale octogonale comportant huit parois latérales (7, ... 14), que les deux éléments tubulaires (1, 1'; 2) sont reliés par huit barrettes allongées (15, ... 22), qui s'étendent par couples (16, 18; 17, 19; ...) vers l'extérieur à partir des zones d'angle d'une paroi latérale de l'élément tubulaire intérieur (1, 1') et ce respectivement perpendiculairement à cette paroi latérale, que chaque barrette (15, ... 22) est reliée à la zone de liaison de deux parois latérales voisines de l'élément tubulaire octogonal, que quatre parois (7, 9, 11, 13) de l'élément tubulaire extérieur (2) sont parallèles aux quatre parois latérales (3, 4, 5, 6) de l'élément tubulaire intérieur (1; 1') et possèdent chacune une fente longitudinale médiane (32, 33, 34, 35), que respectivement deux autres parois latérales (8, 12) de l'élément tubulaire extérieure (2) sont parallèles à une diagonale de la section transversale de l'élément tubulaire intérieur (1; 1') et possèdent chacune une fente longitudinale médiane (36, 37), et que les deux autres parois latérales (???, 14) de l'élément tubulaire extérieur (2) s'étendent parallèlement à l'autre diagonale de la section transversale de l'élément tubulaire intérieur (1, 1') et possèdent chacune une fente longitudinale médiane (38, 39).

4. Barre selon l'une des revendications 1 à 3, **caractérisée en ce que** les évidements continus (41, 42, 43, ...) des barrettes (15 ... 22) sont séparés respectivement à des intervalles réguliers par des parois (34, 45, 46; 47 ...).

5. Barre selon l'une des revendications 1 à 4, **caractérisée en ce que** la largeur des fentes longitudinales (36, 37, 38, 39) des parois latérales (8, 10, 12, 14), qui s'étendent parallèlement aux diagonales, est dimensionnée avec une valeur telle qu'une plaque ou un élément plat peut être inséré dans l'une de ces fentes longitudinales, indépendamment du fait que la plaque est parallèle à une paroi latérale (3, 5) ou à l'autre paroi latérale (4, 6) du tube intérieur (1; 1').

6. Barre selon l'une des revendications précédentes, **caractérisée en ce qu**'il est prévu un profilé de serrage, qui se compose au moins approximativement d'un profilé en U (61) et d'un profilé auxiliaire (72) et que le profilé en U comporte deux parois allongées (66, 67), qui sont reliées à un fond allongé (63; 68) et dont l'une au moins possède, lorsqu'on regarde une coupe transversale du profilé en U, une arête terminale (74), qui est agencée sous la forme d'une rampe (75) qui s'étend vers l'extérieur et forme une extrémité pointue (76) dirigée, vers l'intérieur, de cette paroi (66).

7. Barre selon la revendication 6, **caractérisée en ce qu**'au moins l'une de ces parois (66) du profilé de serrage possède une nervure longitudinale extérieure (73), qui s'étend parallèlement au fond (63; 68) et est située dans la zone comprise entre l'arête terminale (74) de la paroi (66) et le fond (68), et que l'autre extrémité de la rampe (75) et la nervure longitudinale (73) forment une rainure allongée de guidage (77) servant à loger les parois de la partie tubulaire extérieure de la barre profilée.

8. Barre selon la revendication 6 ou 7, **caractérisée en ce que** les deux parois (66, 67) du profilé de serrage possèdent des nervures respectives (73, 73') et des rampes respectives (75, 75'), qui sont disposées symétriquement par rapport à un plan de symétrie passant entre les deux parois (66, 67).

9. Barre selon l'une des revendications 6 à 8, **caractérisée en ce que** le profilé auxiliaire est un profilé plat, qui possède de préférence une paroi en forme de bande (63) comportant au moins un bord longitudinal latéral coudé (64, 65) et/ou que le profilé auxiliaire possède au moins un bord longitudinal, qui est utilisé en tant que support pour une plaque.

10. Barre selon l'une des revendications 6 à 9, **caractérisée en ce qu**'une première zone d'angle (69) du profilé en U est reliée par une barrette allongée (70) et une seconde zone d'angle (69') est reliée par une barrette allongée (71) au profilé auxiliaire (62), ces barrettes (70, 71) faisant de préférence un angle avec les parois allongées (66, 67).
